# EUROPÄISCHE PATENTSCHRIFT

(11) **EP 1 180 902 B1**
(45) Veröffentlichungstag und Bekanntmachung des Hinweises auf die Patenterteilung: **19.10.2005**
(21) Anmeldenummer: 00117076.0
(22) Anmeldetag: 09.08.2000
(51) Int. Cl.: H04Q 7/32, H04L 12/28

(54) **Verfahren zur bereichsabhängigen Betriebsparametereinstellung bei einem mobilen Endgerät, zugehöriges Endgerät und Bereichsinformationssender**
Method of location dependent setting of operational parameters of a mobile station, corresponding station and sender for sending location information
Méthode d'attribution dans une station mobile de paramètres opérationels en fonction de la position de la station, station mobile correspondante et émetteur pour l'émission des informations de position

(43) Veröffentlichungstag der Anmeldung: 20.02.2002
(73) Patentinhaber: TELEFONAKTIEBOLAGET LM ERICSSON (publ), 164 83 Stockholm (SE)
(72) Erfinder: Keller, Ralf, 52146 Wuerselen (DE); Lohmar, Thorsten, 52062 Aachen (DE)
(74) Vertreter: Kribber, Klaus-Dieter

(56) Entgegenhaltungen:
- EP-A- 1 037 482
- US-A- 5 442 805
- WEISS K ET AL: "CONVENTIONAL LOCAL AREA RADIO COVERAGE SYSTEM" MOTOROLA TECHNICAL DEVELOPMENTS,US,MOTOROLA INC. SCHAUMBURG, ILLINOIS, Bd. 13, 1. Juli 1991 (1991-07-01), Seiten 67-69, XP000259225
- HAARTSEN J: "BLUETOOTH - THE UNIVERSAL RADIO INTERFACE FOR AD HOC, WIRELESS CONNECTIVITY" ERICSSON REVIEW,SE,ERICSSON. STOCKHOLM, Nr. 3, 1998, Seiten 110-117, XP000783249 ISSN: 0014-0171

## Beschreibung

### Gebiet der Erfindung

Die vorliegende Erfindung betrifft einen Bereichsinformationssender zur Signalisierung einer Bereichsinformation zur Einstellung von Betriebsparametern eines mobilen Endgerätes (MS) und ein Verfahren zur Signalisierung dieser Bereichsinformation.

### Hintergrund der Erfindung

Durch die Druckschrift WO 98/27778 sind ein Verfahren und eine Vorrichtung zur Anzeige eines Textes auf dem Sichtbildschirm eines mobilen Endgerätes, welches zu einem Mobilfunksystem mit standortabhängigen Diensten gehört, bekannt. Bei dem beschriebenen Verfahren sind standortabhängige Dienste solche Dienste, die dem mobilen Endgerät im Einflußbereich einer bestimmten Vermittlungsstelle durch das Kommunikationssystem bereitgestellt werden. Wenn sich das mobile Endgerät bei der Vermittlungsstelle registriert, fordert die Vermittlungsstelle Benutzerdaten von einer Teilnehmerdatenbank des Systems an. Aufgrund dieser Benutzerdaten sendet die Vermittlungsstelle einen Dienstzonenidentifikationswert an das mobile Endgerät. Das mobile Endgerät vergleicht den empfangenen Dienstzonenidentifikationswert mit gespeicherten Dienstzonenidentifikationswerten. Dem gespeicherten Dienstzonenidentifikationswert ist im mobilen Endgerät jeweils ein Text zugeordnet (z.B. "Innenstadt", "Büro" oder "Heimatzone"). Bei Übereinstimmung des empfangenen mit einem der gespeicherten Dienstzonenidentifikationswerte wird der zugeordnete Text auf dem Sichtbildschirm des mobilen Endgerätes angezeigt, um einen Benutzer über die Dienstzone zu informieren, in der sich das mobile Endgerät gegenwärtig befindet.

Das beschriebene Verfahren zur Textanzeige erfordert die Feststellung des Dienstzonenidentifikationswertes mittels des Mobilfunksystems. Es ist an die Verfügbarkeit des Netzes gebunden, d.h. bei Ausfall des Mobilfunksystems kann dem mobilen Endgerät kein Anzeigetext signalisiert werden. Durch das beschriebene Verfahren lassen sich keine Betriebsparameter des Endgerätes einstellen.

Aus dem Benutzerhandbuch des Ericsson Mobiltelefons T28s (User's Guide Mobile Phone T28s, S. 88 ff., erste Auflage Juni 1999, Ericsson Mobile Communications AB, Veröffentlichungsnummer EN/LZT 126 1456 R1A) ist ein Mobiltelefon bekannt, welches eine Anzahl vordefinierter Profile enthält. Ein solches Profil besteht aus einer Gruppe von Einstellungen für bestimmte Umgebungen oder Situationen. Wenn ein Mobilfunkteilnehmer beispielsweise an einer Besprechung teilnimmt, kann er das Profil 'Besprechung' mit den für diese Situation geeigneten Einstellungen, z.B. geringe Ruflautstärke, aktivierter Vibrationsalarm, Annahme aller Anrufe, aktivieren. Bei Anschluß verschiedener Zubehörgeräte an das Mobiltelefon werden automatisch Profile aktiviert. Wird das Telefon beispielsweise in einen Kfz-Adapter eingesetzt, wird das Profil 'KFZ' aktiviert, d.h. unter anderem maximale Ruflautstärke, deaktivierter Vibrationsalarm, eingeschaltete Beleuchtung.

Die genannte Vorrichtung erfordert zum Aktivieren einer Gruppe von Einstellungen eines Mobiltelefons eine Teilnehmeraktion, beispielsweise das Auswählen eines entsprechenden Menüpunktes, das Betätigen einer Funktionstaste oder den Anschluß eines Zubehörteils an die Hardwareschnittstelle des Mobiltelefons, beispielsweise durch die Verbindung des Telefons mit einer Ladestation, mit einer Freisprecheinrichtung oder einem Kfz-Adapter.

Ein System, in dem ein Bereichsidentifikator in einem begrenzten Sendegebiet drahtlos gesendet wird, ist bereits aus dem Aufsatz von Weiss u.a., "Conventional Local Area Radio Coverage System", Motorola Technical Developments, Bd. 13, 1. Juli 1991, S. 67-69, bekannt.

Aus EP 1 037 482 A2 ist ein mobiles Funkterminal bekannt, bei dem ortsabhängig Luftschnittstellenparameter eingestellt werden. Dazu wird eine Ortinformation mittels eines GPS Satelliten an das Terminal übertragen.

### Aufgabe der Erfindung

Es ist die Aufgabe der vorliegenden Erfindung, ein Verfahren und eine Vorrichtung vorzustellen, welche die automatische Einstellung von Betriebsparametern eines mobilen Endgerätes ermöglichen.

Dies wird erfindungsgemäß gelöst durch die Lehre der unabhängigen Ansprüche.

Ein mobiles Endgerät im Sinne der vorliegenden Erfindung ist beispielsweise ein Mobiltelefon eines Mobilfunknetzes, ein in einem Fahrzeug eingebautes Telefon, ein Personal Digital Assistant PDA, ein Laptop oder eine Vorrichtung, welche mit einem weiteren Endgerät zur Kommunikation mit einem Mobilfunknetz verbunden werden kann, beispielsweise eine PCMCIA-Karte für einen Laptop. Das Endgerät kann neben beispielsweise einem GSM-, GPRS-, oder UMTS-Transceiver weitere Übertragungseinrichtungen umfassen, z.B. einen Bluetooth™-, DECT- oder WLAN-Adapter.

Die Funktionsweise des Endgerätes hängt von eingestellten Betriebsparametern ab. Beispielsweise kann bei einem Mobiltelefon eine bestimmte Ruflautstärke eingestellt werden, ein Vibrationsalarm aktiviert oder ein vom Benutzer eingegebenes Rufumleitungsprofil eingestellt sein. In Abhängigkeit von der gegenwärtigen Betriebsparametereinstellung können ein Laptop oder ein PDA dem Benutzer unterschiedliche Anwendungsprogramme anbieten. Die Energieversorgung eines Endgerätes kann mittels einer eingebauten Energiequelle oder, bei einer anderen Betriebsparametereinstellung, durch ein angeschlossenes Ladegerät erfolgen. Weiterhin können, abhängig von der Betriebsparametereinstellung, bestimmte Endgerätefunktionen an andere Vorrichtungen übergeben werden. Beispielsweise können ein Mikrofon oder ein Signalprozessor zur Echokompensation eines Mobiltelefons abgeschaltet werden, wenn eine zusätzliche Freisprecheinrichtung verwendet wird. Weiterhin kann ein Endgerät durch eine bestimmte Betriebsparametereinstellung ausgeschaltet werden.

Es gibt Betriebsparametereinstellungen für das Endgerät, welche von einem Aufenthaltsbereich abhängen. Ein Aufenthaltsbereich ist beispielsweise ein Besprechungszimmer, ein Fahrzeuginnenraum, ein Theater, ein Restaurant oder eine Kirche. Einem Aufenthaltsbereich ist jeweils eine Bereichsinformation zugeordnet, die den Aufenthaltsbereich bezeichnet. Diese Bereichsinformation wird in einem begrenzten Sendegebiet drahtlos gesendet. Sendegebiet und Aufenthaltsbereich können übereinstimmen. Beispielsweise kann ein Bereichsinformationssender die Bereichsinformation 'Besprechungszimmer', welche zu einer bestimmten Betriebsparametereinstellung im Endgerät, wie beispielsweise zur Stummschaltung des Ruftons, führt, innerhalb eines Besprechungszimmers aussenden.

Alternativ stimmen der Aufenthaltsbereich und das Sendegebiet nicht oder nicht vollständig überein. Insbesondere kann die Bereichsinformation für einen Aufenthaltsbereich, der nur über definierte Zugänge erreichbar ist, lediglich in den Zugängen ausgesendet werden. Beispielsweise kann ein Bereichsinformationssender die Bereichsinformation 'Flugzeug', die zum Ausschalten des Endgerätes führt, innerhalb einer Gangway als begrenztem Sendegebiet ausstrahlen, während der Aufenthaltsbereich das Flugzeug darstellt, welches über die Gangway erreicht wird. Die Betriebsparametereinstellung bleibt auch nach Verlassen des Sendegebietes bis zu einer erneuten Einstellung erhalten.

Das Endgerät empfängt die im Sendegebiet drahtlos gesendete Bereichsinformation. Der Empfang erfolgt mittels einer ersten Übertragungseinrichtung des Endgerätes, beispielsweise durch das Überwachen eines Broadcast-Kanals. Die Überwachung kann beispielsweise kontinuierlich oder in bestimmten Zeitabständen erfolgen. Im einfachsten Fall erfolgt der Empfang der Bereichsinformation in einem Schritt, d.h. wenn nur die Bereichsinformation als solche vom Bereichsinformationssender übertragen wird. Alternativ kann der Empfang der Bereichsinformation in mehreren Schritten erfolgen und einen Authentifizierungsdialog oder eine Entschlüsselung umfassen. Nach dem Empfang ermittelt das Endgerät Betriebsparameter mittels der empfangenen Bereichsinformation und stellt sie ein.

Im Endgerät sorgt eine Rechnereinheit für die Ermittlung und Einstellung der Betriebsparameter. Die Einstellung erfolgt bevorzugt mittels eines Statusspeichers, der angibt, welche Betriebsparameter gegenwärtig für das Endgerät gültig sind.

Die Erfindung ermöglicht auf einfache Weise eine aufenthaltsabhängige Betriebsparametereinstellung eines mobilen Endgerätes. Es erfordert keine Benutzerinteraktion. Vorteilhafterweise verfügt der Benutzer so ohne eigenen Aufwand über ein Endgerät, dessen Betriebsparametereinstellungen an seine Umgebung automatisch angepaßt sind. Die automatische Anpassung der Betriebsparametereinstellung ist auch vorteilhaft für die Umgebung des Benutzers. Beispielsweise werden Besucher einer Theateraufführung nicht durch klingelnde Mobiltelefone gestört, wenn mittels der empfangenen Bereichsinformation 'Theater' der Rufton eines Mobiltelefons stummgeschaltet und der Vibrationsalarm aktiviert wird. Die Erfindung kann vorteilhafterweise auch Sicherheitsanforderungen bestimmter Aufenthaltsbereiche erfüllen. So kann beispielsweise die Bereichsinformation 'Flugzeug' zum gesetzlich vorgeschriebenen Abschalten eines Mobiltelefons im Flugzeug führen.

Die vorliegende Erfindung betrifft einen Bereichsinformationssender zur Signalisierung einer Bereichsinformation zur Einstellung von Betriebsparametern eines mobilen Endgerätes. Er enthält eine erste Übertragungsvorrichtung, welche eine Bereichsinformationsanforderung empfängt und eine zugeordnete Bereichsinformation drahtlos in einem begrenzten Sendegebiet aussendet. Er enthält weiterhin einen Bereichsinformationsspeicher, welcher Bereichsinformationsdaten speichert, und eine Rechnereinheit, welche mittels der gespeicherten Bereichsinformationsdaten die Bereichsinformation ermittelt, die der Bereichsinformationsanforderung zugeordnet ist.

Ein derartiger Bereichsinformationssender kann kostengünstig produziert werden. Die notwendigen Komponenten erfordern lediglich einen geringen Platzbedarf und können in einem unauffälligen Gehäuse untergebracht werden, so daß der im Sendegebiet plazierte Bereichsinformationssender unauffällig ist. Der Sender muß nicht mit einem Mobilfunksystem oder einem Computernetz verbunden werden. Er erfordert zum Betrieb keine weitere Infrastruktur und kann daher flexibel eingesetzt werden.

Vorteilhafterweise kann die Erfindung als Computerprogramm realisiert werden. Dies erlaubt die Verwendung der Erfindung in Endgeräten, ohne daß Änderungen an der Hardware erforderlich sind. Weiterhin erlaubt das Computerprogramm im Rahmen von Herstellung und Entwicklung die einfache und kostengünstige Durchführung von Tests und Simulationen.

Weitere vorteilhafte Ausführungsformen und Verbesserungen der Erfindung sind den abhängigen Ansprüchen zu entnehmen.

In einer Ausgestaltung sendet das Endgerät eine Bereichsinformationsanforderung. Vorzugsweise erfolgt dies mittels der ersten Übertragungseinrichtung des Endgerätes. Durch das Anfordern der Bereichsinformation kann zum Empfang der Bereichsinformation auf eine regelmäßige Überwachung eines Broadcast-Kanals verzichtet werden, wodurch Energie gespart wird und beispielsweise die Batterielebensdauer verlängert wird. Weiterhin vorteilhaft ist das Senden der Bereichsinformation auf Anforderung anstatt mittels Broadcast-Übertragungen, wenn es für einen Aufenthaltsbereich verschiedene individuelle Bereichsinformationen für einzelne Benutzer oder Benutzergruppen gibt. Die Endgeräte müssen dann nicht eine Vielzahl von irrelevanten Bereichsinformationen auswerten, sondern nur die gezielt angeforderte Bereichsinformation. Die Bereichsinformationsanforderung kann beispielsweise regelmäßig vom Endgerät ausgesendet werden.

In einer anderen Ausgestaltung sind im Endgerät Bereichsinformationen und Betriebsparameter einander zugeordnet und gespeichert. Die Ermittlung der Betriebsparameter erfolgt durch Vergleichen der empfangenen Bereichsinformation mit gespeicherten Bereichsinformationen, um eine Übereinstimmung festzustellen. Als Betriebsparameter werden die der übereinstimmenden Bereichsinformation zugeordneten Betriebsparameter ermittelt.

In einer weiteren Ausgestaltung sind die Bereichsinformationen und Betriebsparameter in einem Bereichsinformationsspeicher des Endgerätes einander zugeordnet und gespeichert. Das Vergleichen erfolgt durch die Rechnereinheit des Endgerätes.

Die Verwendung von Vergleichstabellen, die im Endgerät gespeichert sind, ermöglicht eine einfache und flexible Zuordnung von Betriebsparametereinstellungen und Bereichsinformationen durch den Endgerätehersteller oder den Benutzer. Die Zuordnungen können geändert und erweitert werden. Die Betriebsparametereinstellungen können einfach an Endgeräte unterschiedlicher Hersteller angepaßt werden.

In einer weiteren Ausgestaltung ist im Endgerät eine Interpretationsvorschrift gespeichert. Die Ermittlung der Betriebsparameter erfolgt durch Interpretieren der empfangenen Bereichsinformation mittels der Interpretationsvorschrift. Dies erfolgt beispielsweise durch die Rechnereinheit. Die Interpretationsvorschrift ist in der Regel in einem Interpretationsvorschriftsspeicher des Endgerätes gespeichert, beispielsweise in einem Speicher oder Speicherbereich der Rechnereinheit. Alternativ kann die Interpretationsvorschrift von der Rechnereinheit aus einem weiteren Speicher oder Speicherbereich des Endgerätes geladen werden.

Die Rechnereinheit des Endgerätes interpretiert die empfangene Bereichsinformation mittels der gespeicherten Vorschrift. Vorteilhafterweise wird so im Endgerät Speicherplatz eingespart, wenn anstelle umfangreicher Zuordnungstabellen eine vergleichsweise kurze Interpretationsvorschrift gespeichert wird. Die Verwendung einer Interpretationsvorschrift zur Ermittlung der Betriebsparametereinstellung ist auch in Kombination mit Zuordnungstabellen vorteilhaft, da dies beispielsweise mehrteilige oder hierarchisch aufgebaute Bereichsinformationen unterstützt, was sowohl detaillierte als auch individuelle Bereichsinformationen ermöglicht.

In einer weiteren Ausgestaltung erfolgt das Einstellen der ermittelten Betriebsparameter durch Abspeichern der Statusinformation in einem Statusinformationsspeicher des Endgerätes. So kann im Endgerät Speicherplatz eingespart werden, wenn beispielsweise als Statusinformation ein Flag ermittelt und gesetzt wird, welches in der Tabelle der Betriebsparametereinstellungen die gegenwärtig gültige Einstellung bezeichnet. Der Statusinformationsspeicher kann als separates Speichermodul oder als Speicherbereich eines Speichermoduls realisiert werden.

In einer weiteren Ausgestaltung ist das Endgerät eine Kommunikationsvorrichtung eines Mobilfunksystems. Eine solche Kommunikationsvorrichtung, wie beispielsweise ein Mobiltelefon, verfügt üblicherweise über eine Vielzahl von Betriebsparametern, deren Einstellungen hinsichtlich des Aufenthaltsbereiches angepaßt werden können. Aufgrund der Vielzahl der verschiedenen Betriebsparameter ist es für den Benutzer einer solchen Kommunikationsvorrichtung besonders vorteilhaft, wenn die Einstellung automatisch vorgenommen wird.

In einer weiteren Ausgestaltung empfängt das mobile Endgerät die Bereichsinformation mittels einer ersten Übertragungseinrichtung. Durch das Einstellen der Betriebsparameter wird eine zur Kommunikation der Kommunikationsvorrichtung mit dem Mobilfunksystem vorgesehene zweite Übertragungseinrichtung deaktiviert, und die Kommunikation mit dem Mobilfunksystem erfolgt mittels der ersten Übertragungseinrichtung.

In einer weiteren Ausgestaltung enthält das mobile Endgerät eine zweite Übertragungseinrichtung zur Kommunikation mit dem Mobilfunknetz.

Die Bereithaltung zweier unterschiedlicher Übertragungseinrichtung ist besonders vorteilhaft, da eine Betriebsparametereinstellung für die Kommunikationsvorrichtung unabhängig von dem Mobilfunksystem und dessen Netzabdeckung oder Zelleneinteilung vorgenommen werden kann. Es werden keine Ressourcen im Mobilfunknetz benötigt. Die Festlegung der Aufenthaltsbereiche ist unabhängig von der Zellenstruktur des Mobilfunknetzes und kann flexibel und unabhängig von dem Mobilfunknetz geändert werden. Besonders vorteilhaft ist dazu der Einsatz einer Übertragungseinrichtung nach dem Bluetooth™-, DECT oder WLAN-Standard. Die Übertragung kann auch mit Hilfe einer Infrarot- oder Ultraschall-Übertragungseinrichtung erfolgen, oder durch induktive Übertragung, beispielsweise mittels eines TAG-Systems.

Eine Betriebsparametereinstellung, welche die Kommunikation des Endgerätes mit dem Mobilfunksystem mittels der ersten Übertragungseinrichtung bewirkt, ist beispielsweise vorteilhaft in geschlossenen Fahrzeugen, in denen die Verbindung zum Mobilfunknetz mittels der zweiten Übertragungseinrichtung aufgrund von Abschirmeffekten, z.B. wegen metallbedampfter Scheiben des Fahrzeugs, erschwert ist. Ein Mobiltelefon empfängt mittels seiner ersten Übertragungseinrichtung, wenn dessen Benutzer in das Fahrzeug einsteigt, die Bereichsinformation 'KFZ' und stellt die Betriebsparameter so ein, daß die zweite Übertragungseinrichtung, die zur Kommunikation mit den Basisstationen des Mobilfunknetzes vorgesehen ist, deaktiviert wird und die Kommunikation des Mobiltelefons mit dem Mobilfunksystem mittels der ersten Übertragungseinrichtung und einer entsprechenden Basisstation, die im Fahrzeuginneren angebracht ist, erfolgt. Die Basisstation im Fahrzeug stellt die Verbindung zum Mobilfunksystem mittels einer Antenne, die beispielsweise an der Außenseite des Fahrzeugs angebracht ist, her. So kann der Benutzer sein Mobiltelefon auch in Fahrzeugen verwenden, in denen der Mobilfunkempfang normalerweise erschwert oder sogar unmöglich ist.

Um die im Fahrzeuginneren angebrachte Basisstation zu erreichen, benötigt das Mobiltelefon eine geringere Sendeleistung, als um eine Basisstation des Mobilfunksystems, die sich außerhalb des Fahrzeugs befindet, zu erreichen. Durch das Umschalten auf die erste Übertragungseinrichtung wird Energie der Batterie gespart. Dies bewirkt eine größere verfügbare Bereitschaftszeit bzw. Gesprächszeit des Mobiltelefons.

In einer weiteren Ausgestaltung enthält die empfangene Bereichsinformation mehrere Bereichstypen. Es gibt beispielsweise einen allgemeinen Bereichstyp (z.B. 'KFZ'), einen benutzerabhängigen Gruppenbereichstyp (z.B. 'Dienstwagen'), einen benutzerunabhängigen Gruppenbereichstyp (z.B. 'Mietwagen'), einen individuellen benutzerabhängigen Bereichstyp (z.B. 'Ulrike_Mustermann'), oder einen individuellen benutzerunabhängigen Bereichstyp (z.B. 'Fahrzeug_mit_Kennzeichen AC-XYZ'). Dies erlaubt eine hohe Flexibilisierung bei der Gestaltung von Betriebsparametereinstellungen und Bereichsinformationen. Aufenthaltsbereichen von mobilen Endgeräten können so individuelle Eigenschaften, die sich in individuellen Betriebsparametereinstellungen von mobilen Endgeräten zeigen, für bestimmte Benutzer oder Benutzergruppen zugeordnet werden. Endgeräte verschiedener Benutzer können im gleichen Aufenthaltsbereich über unterschiedliche, automatisch eingestellte, Betriebsparameter verfügen.

Eine Ausgestaltung der vorliegenden Erfindung betrifft einen Bereichsinformationssender, der mobil ist. Dies erlaubt die Festlegung eines mobilen Sendegebietes oder eines mobilen Aufenthaltsbereiches, für den eine bestimmte Betriebsparametereinstellung eines mobilen Endgerätes gelten soll. Besonders vorteilhaft ist der Einsatz eines mobilen Bereichsinformationssenders in einem Fahrzeug.

Eine weitere Ausgestaltung der vorliegenden Erfindung betrifft einen Bereichsinformationssender, bei dem im Bereichsinformationsspeicher Bereichsinformationsanforderungen und Bereichsinformationen einander zugeordnet und gespeichert sind, und bei dem die Rechnereinheit durch Vergleichen eine Übereinstimmung zwischen der empfangenen und einer gespeicherten Bereichsinformationsanforderung feststellt und als zu sendende Bereichsinformation die der übereinstimmenden Bereichsinformationsanforderung zugeordnete Bereichsinformation ermittelt.

Die Verwendung von Vergleichstabellen, die im Bereichsinformationssender gespeichert sind, ermöglicht eine einfache und flexible Zuordnung von Bereichsinformationsanforderungen und Bereichsinformationen durch den Bereichsinformationssenderhersteller oder den Betreiber. Die Zuordnungen können einfach geändert und erweitert werden.

In einer weiteren Ausführungsform der vorliegenden Erfindung ermittelt die Rechnereinheit des Bereichsinformationssenders die Bereichsinformation mittels einer Interpretationsvorschrift. Die Interpretationsvorschrift ist in der Regel in einem Interpretationsvorschriftsspeicher des Bereichsinformationssenders gespeichert, beispielsweise in einem Speicher oder Speicherbereich der Rechnereinheit. Alternativ kann die Interpretationsvorschrift von der Rechnereinheit aus einem weiteren Speicher oder Speicherbereich des Bereichsinformationssenders geladen werden. Diese Ausführungsform spart Speicherplatz. Sie ist vorteilhaft bei mehrteiligen Bereichsinformationsanforderungen, mittels derer individuelle Bereichsinformationen angefordert werden können. Mehrteilige Bereichsinformationsanforderungen können für einen Bereichsinformationssender uneindeutig sein, wenn beispielsweise bestimmte Teile der Bereichsinformationsanforderung nicht ausgewertet werden können. Die Interpretationsvorschrift kann für diesen Fall angeben, welche Teile der Bereichsinformationsanforderung zur Ermittlung der Bereichsinformation ausgewertet werden.

In einer weiteren Ausführungsform der vorliegenden Erfindung enthält der Bereichsinformationssender eine zweite Übertragungseinrichtung zur Kommunikation mit einem Mobilfunknetz. Dies ist in Fahrzeugen vorteilhaft, in denen Abschirmeffekte die direkte Kommunikation eines Endgerätes mit dem Mobilfunknetz erschweren oder verhindern. Die gesendete Bereichsinformation informiert das Endgerät über die Möglichkeit einer indirekten Kommunikation mit dem Mobilfunknetz mittels des Bereichsinformationssenders. Die Umschaltung der Endgeräteübertragungsvorrichtung erfordert keine Benutzerinteraktion, so daß eine dauerhafte Erreichbarkeit des Mobilfunkbenutzers gewährleistet ist.

In einer weiteren Ausführungsform der vorliegenden Erfindung ist das Computerprogramm auf einem computerlesbaren Medium gespeichert. Dies ermöglicht den einfachen Einsatz der Erfindung in verschiedenen Geräten, wie beispielsweise auf Testsystemen, Simulationssystemen oder Maschinen zur Endgerätefertigung.

Im folgenden wird die Erfindung anhand von Ausführungsbeispielen und anhand der Figuren näher erläutert.

### Kurzbeschreibung der Figuren

Folgende Figuren zeigen:
- Fig. 1: eine Anwendung der vorliegenden Erfindung für einen Aufenthaltsbereich in einem Fahrzeug,
- Fig. 2: eine weitere Anwendung der Erfindung,
- Fig. 3: einen Informationsaustausch zwischen einem Bereichsinformationssender und einem mobilen Endgerät,
- Fig.4: einen weiteren Informationsaustausch zwischen einem Bereichsinformationssender und einem mobilen Endgerät,
- Fig. 5: eine Zuordnung von Bereichsinformationen und Betriebsparametereinstellungen in einem Endgerät,
- Fig. 6: eine Interpretationsvorschrift für Bereichsinformationen in einem Endgerät,
- Fig. 7: verschiedene Bereichstypen und deren Zuordnung zu Betriebsparametereinstellungen in einem Endgerät,
- Fig. 8: eine vereinfachte Darstellung von Komponenten eines mobilen Endgerätes,
- Fig. 9: eine vereinfachte Darstellung von Komponenten eines Bereichsinformationssenders.

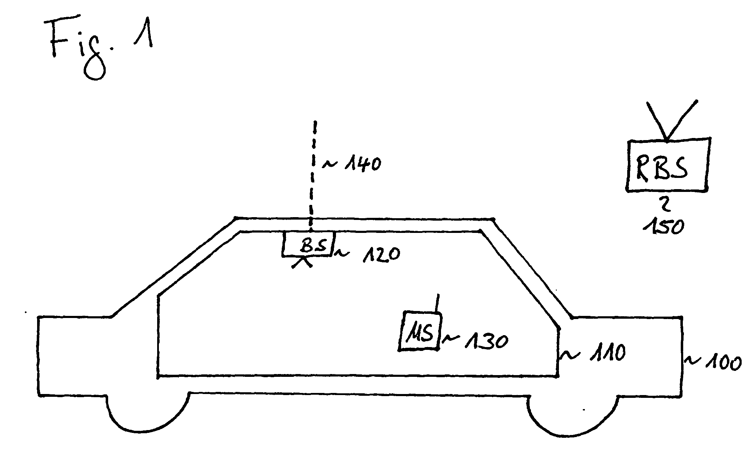

Fig. 1 zeigt ein Fahrzeug 100, in dessen Fahrgastzelle 110 ein Bereichsinformationssender BS 120 angebracht ist. Der Bereichsinformationssender 120 sendet drahtlos innerhalb der Fahrgastzelle 110 des Fahrzeugs 100 eine Bereichsinformation aus, beispielsweise die Bereichsinformation 'PKW'. Diese Bereichsinformation gilt innerhalb der gesamten Fahrgastzelle 110 für Endgeräte, die sich in diesem Aufenthaltsbereich befinden. Die Bereichsinformation wird innerhalb der gesamten Fahrgastzelle ausgesendet. In dem dargestellten Beispiel stimmen der Aufenthaltsbereich, dem die Bereichsinformation zugeordnet ist, und das begrenzte Sendegebiet, in dem die Bereichsinformation gesendet wird, überein. Ein Mobiltelefon MS 130 innerhalb der Fahrgastzelle 110 empfängt die vom Bereichsinformationssender 120 gesendete Bereichsinformation. Es ermittelt, wie später ausführlich erklärt wird, aus der empfangenen Bereichsinformation eine Betriebsparametereinstellung und stellt diese ein. Beispielsweise können für den Aufenthaltsbereich 'PKW' der Rufton auf die höchstmögliche Lautstärke eingestellt und der Vibrationsalarm abgeschaltet werden.

In dem in Fig. 1 dargestellten Beispiel ist der Bereichsinformationssender 120 mit einer Außenantenne 140 des Fahrzeugs 100 verbunden. Der Bereichsinformationssender 120 enthält einen Bluetooth™-Transceiver zur Verbindung mit einem mobilen Endgerät und einen Transceiver zur Verbindung mit einem Mobilfunksystem, d.h. zu einer Basisstation RBS 150 des Mobilfunksystems. Die Verbindung mit dem Mobilfunksystem erfolgt über die Außenantenne 140 des Fahrzeugs 100. Das Mobiltelefon MS 130 verfügt über einen Mobilfunktransceiver zur Verbindung mit dem Mobilfunksystem und über eine Bluetooth™-Übertragungseinrichtung zur Verbindung mit dem Bereichsinformationssender 120. Außerhalb der Fahrgastzelle 110 benutzt das Mobiltelefon 130 seinen Mobilfunktransceiver und eine eingebaute Antenne zur Verbindung mit der Basisstation 150 des Mobilfunksystems. Innerhalb des Fahrzeugs, d.h. in der Fahrgastzelle 110, erschweren Abschirmeffekte, die beispielsweise durch die metallische Karosserie des Fahrzeugs hervorgerufen werden, diese Verbindung. Mittels der empfangenen Bereichsinformation 'PKW' stellt das Mobiltelefon MS 130 seine Betriebsparameter so ein, daß der Mobilfunktransceiver abgeschaltet ist und die Verbindung zum Mobilfunksystem mittels des Bluetooth™-Tansceivers erfolgt. Innerhalb des Fahrzeugs benutzt daher das Mobiltelefon seine Bluetooth™-Übertragungseinrichtung, um über den Bereichsinformationssender 120 und die Außenantenne 140 eine Verbindung mit der Basisstation 150 herzustellen, anstatt sich über seinen Mobilfunktransceiver und die eingebaute Antenne mit der Basisstation 150 zu verbinden.

Weitere Beispiele für Betriebsparametereinstellungen eines mobilen Endgerätes, das über einen Mobilfunktransceiver und eine Bluetooth™-Übertragungseinrichtung verfügt, und die aufgrund der empfangenen Bereichsinformation 'PKW' vorgenommen werden können, betreffen die Auslagerung von Endgerätefunktionen an externe Vorrichtungen. Mittels der Bluetooth™-Übertragungstechnik lassen sich beispielsweise entsprechende im Auto installierte Mikrofone, Autolautsprecher der Stereoanlage oder eine Tastatur oder ein Display des Fahrzeugbordcomputers drahtlos mit dem Mobiltelefon verbinden. Die Betriebsparametereinstellung, die der Bereichsinformation 'PKW' zugeordnet ist, veranlaßt dann das Mobiltelefon, diese vorhandenen externen anstelle von eingebauten Vorrichtungen zu benutzen.

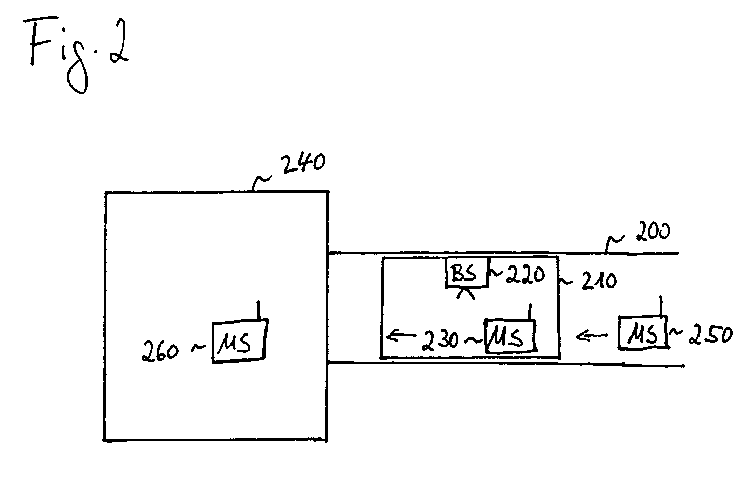

Fig. 2 zeigt eine Anwendung der Erfindung, bei der das begrenzte Sendegebiet, in dem die Bereichsinformation drahtlos übertragen wird, und der Aufenthaltsbereich, für den die zugeordnete Betriebsparametereinstellung eines mobilen Endgerätes gilt, nicht übereinstimmen. Gezeigt sind ein Zugang 200, beispielsweise eine Gangway, zu einem Aufenthaltsbereich 240, beispielsweise einer Kabine eines Flugzeugs. Der Zugang 200 verfügt über einen Bereichsinformationssender BS 220, der in einem begrenzten Sendegebiet 210, welches sich innerhalb des Zugangs 200 befindet, eine Bereichsinformation, beispielsweise die Bereichsinformation 'Flugzeug', aussendet. Ein Mobiltelefon MS 250 verfügt außerhalb des Sendegebietes oder des Aufenthaltsbereiches über eine Betriebsparametereinstellung. Sobald sich ein Mobiltelefon MS 230 im Sendegebiet 210 befindet, empfängt es eine Bereichsinformation. Es ermittelt mittels der Bereichsinformation Betriebsparameter und stellt diese ein. Beispielsweise kann aufgrund der Bereichsinformation 'Flugzeug' ein Betriebsparameter 'Aus' ermittelt werden. Das Einstellen dieses Betriebsparameters bewirkt das Abschalten des Mobiltelefons. Ein Mobiltelefon MS 260 im Aufenthaltsbereich 240 ist daher ausgeschaltet.

Das Aussenden der Bereichsinformation durch den Bereichsinformationssender 220 kann kontinuierlich oder in bestimmten Zeitabständen erfolgen oder beispielsweise mittels einer Lichtschranke, die in dem Zugang angebracht ist, veranlaßt werden. Es kann zwischen Benutzern, die den Aufenthaltsbereich betreten, und Benutzern, die den Aufenthaltsbereich verlassen, unterschieden werden, um unterschiedliche Bereichsinformationen für diese Benutzer zu senden. Dies ermöglicht beispielsweise beim Verlassen des Aufenthaltsbereiches 240 ein Zurückstellen der Betriebsparametereinstellung des Mobiltelefons auf seine vorherige Einstellung. Im angegebenen Beispiel ist das Mobiltelefon MS 260 beim Verlassen des Aufenthaltsbereiches 240 zum Empfang einer Bereichsinformation bereit, wenn durch das Einstellen des Betriebsparameters 'Aus' zwar das Mobiltelefon abgeschaltet wird, die Übertragungseinrichtung zum Empfang der Bereichsinformation sich aber in einem Bereitschaftmodus befindet, oder wenn das Mobiltelefon wieder vom Benutzer eingeschaltet wird.

Im folgenden werden ohne Figur Übertragungsmechanismen der Bereichsinformation erläutert. Vorzugsweise erfolgt die Übertragung der Bereichsinformation durch eine Broadcast-Übertragung auf einem Broadcastkanal durch den Bereichsinformationssender BS, d.h. die Übertragung erfolgt kontinuierlich oder in bestimmten Zeitabständen. Ein Empfänger im mobilen Endgerät überwacht den Broadcastkanal kontinuierlich oder in regelmäßigen Zeitabständen und empfängt die Bereichsinformation, wenn sich das Endgerät im Sendegebiet aufhält. In einer anderen Ausgestaltung der vorliegenden Erfindung sendet der Bereichsinformationssender BS die Bereichsinformation als Antwort auf eine entsprechende Bereichsinformationsanforderung. Diese Anforderung kann sowohl von dem mobilen Endgerät als auch von einer weiteren Vorrichtung, beispielsweise von einer Lichtschranke im Zugangsbereich, an den Bereichsinformationssender gesendet werden. Eine vom mobilen Endgerät gesendete Bereichsinformationsanforderung kann vom Endgerät beispielsweise auf einem Broadcastkanal kontinuierlich oder in regelmäßigen Zeitabständen übertragen werden.

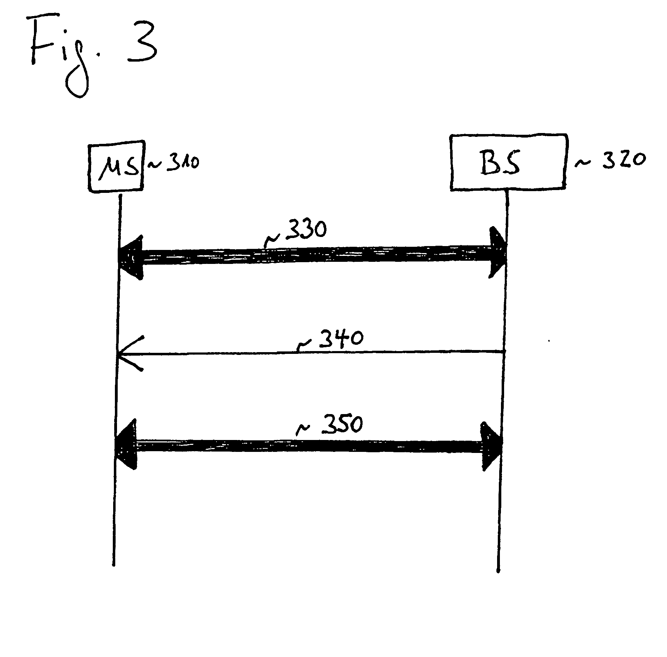

Fig. 3 zeigt einen Informationsaustausch zwischen einem Bereichsinformationssender BS 320 und einem Mobiltelefon MS 310 für die bereits unter Fig. 1 beschriebene Anwendung. Beide Geräte verfügen über eine Bluetooth™-Übertragungsvorrichtung und zusätzlich über einen Mobilfunktransceiver, beispielsweise über einen Transceiver für GSM oder GPRS. Wenn sich das Mobiltelefon MS 310 im Sendegebiet des Bereichsinformationssenders BS 320 befindet, wird eine Kommunikationsverbindung zwischen beiden Geräten aufgebaut. Die zum Zweck des Aufbaus einer grundlegenden Bluetooth™-Kommunikationsverbindung ausgetauschten Nachrichten sind in einem Nachrichtenbündel 330 dargestellt. Dieses Nachrichtenbündel 330 bewirkt den Aufbau einer *ad hoc* Verbindung, d.h. allgemein das Etablieren eines Pikonetzes, welches aus zwei Kommunikationspartnern besteht, oder die Anmeldung in einem Scatternet, welches aus mehreren Pikonetzen besteht. Es kann u.a. die Einrichtung der Verbindung mittels wake-up-carrier, eine Frequenzsynchronisierung, eine Festlegung der von Master und Slave Funktionen, sowie eine Authentifizierung beinhalten. Weitere Informationen über Bluetooth™ und einen entsprechenden Verbindungsaufbau können dem Artikel 'Bluetooth- The universal radio interface for *ad hoc*, wireless connectivity' von Jaap Haartsen, Ericsson Review No.3, 1998, S.110-117, entnommen werden. Mittels des Nachrichtenbündels 330 können zusätzlich Nachrichten von Sicherheitsfunktionen höherer Protokollschichten ausgetauscht werden, beispielsweise zur Authentifizierung.

Wenn die grundlegende Verbindung zwischen dem Mobiltelefon MS 310 und dem Bereichsinformationssender BS 320 etabliert ist, sendet der Bereichsinformationssender BS 320 eine Bereichsinformation 340. Die Bereichsinformation kann beispielsweise ein Bezeichner des Bereichsinformationssenders BS 320 sein. Alternativ kann die Bereichsinformation, wie später noch ausführlich erklärt wird, einen oder mehrere Bereichsinformationsanteile enthalten, beispielsweise eine allgemeinen Bereichsinformation, eine benutzerabhängige Gruppenbereichsinformation, eine benutzerunabhängige Gruppenbereichsinformation, eine individuelle benutzerabhängige Bereichsinformation, oder eine individuelle benutzerunabhängige Bereichsinformation. Die Bereichsinformation kann auch eine Bluetooth™-Adresse oder eine IP-Adresse sein.

Das Mobiltelefon MS 310 ermittelt mittels der empfangenen Bereichsinformation Betriebsparameter und stellt diese ein. Eine Betriebsparametereinstellung, die bei der Anwendung gemäß Fig. 1 eingestellt wird, betrifft die Deaktivierung des eingebauten Mobilfunktransceivers und die Aktivierung der eingebauten Bluetooth™-Übertragungsvorrichtung zur Kommunikation mit dem Mobilfunknetz. Die Kommunikation erfolgt dann nicht direkt mit einer Basisstation, sondern indirekt über den Bereichsinformationssender BS 320. Der dazu erforderliche Nachrichtenaustausch, der sowohl Signalisierungsinformationen als auch Benutzerinformationen betreffen kann, ist in Fig. 3 vereinfacht durch das Nachrichtenbündel 350 dargestellt. In einer möglichen Ausgestaltung entsprechen bei der indirekten Kommunikation mittels des Bereichsinformationssenders die ausgetauschten Informationen vollständig denen, die bei einer direkten Kommunikation mit dem Mobilfunknetz ausgetauscht würden.

In einer weiteren Ausgestaltung der Erfindung wird die Bereichsinformation bereits beim Herstellen der grundlegenden Bluetooth™-Verbindung ausgetauscht. Beispielsweise kann ein Scatternet-Bezeichner als Bereichsinformation übertragen werden. Die Nachricht mit der Bereichsinformation 340 ist in diesem Fall im Nachrichtenbündel 330 enthalten.

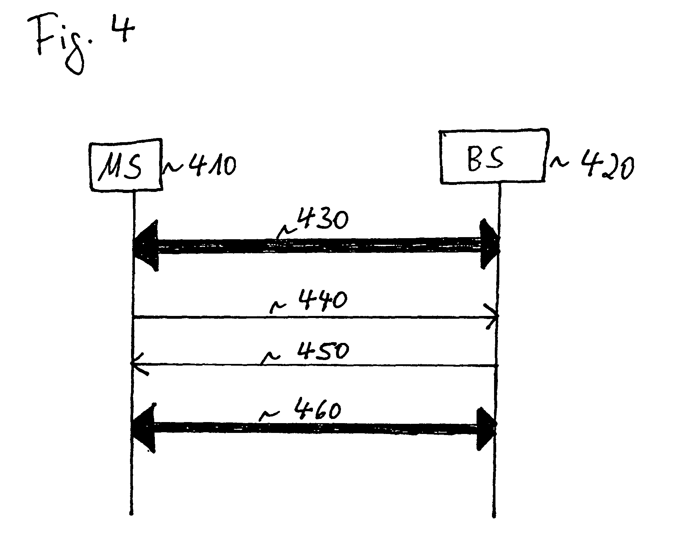

Ein weiteres Beispiel für einen Informationsaustausch zwischen einem Bereichsinformationssender BS 420 und einem Mobiltelefon MS 410 für die bereits unter Fig. 1 beschriebene Anwendung zeigt Fig. 4. Im Unterschied zu dem schon zu Fig. 3 beschriebenen Informationsaustausch sendet das Mobiltelefon MS 410, nachdem eine grundlegenden Bluetooth™-Verbindung 430 etabliert ist, eine Bereichsinformationsanforderung 440 an den Bereichsinformationssender BS 420. Vorzugsweise enthält die Bereichsinformationsanforderung 440 einen Bezeichner des Mobiltelefons MS 410. Sie kann einen oder mehrere Anteile enthalten, die das Mobiltelefon oder seinen Benutzer bezeichnen, wie beispielsweise einen allgemeinen Anforderungsteil, z. B. 'Mobiltelefon', einen benutzerabhängigen Gruppenanforderungsteil, z. B. 'Diensttelefon', einen benutzerunabhängigen Gruppenanforderungsteil, z. B. 'Mobiltelefon_des_Herstellers_X', einen individuellen benutzerabhängigen Anforderungsteil, z. B die Telefonnummer des Benutzers, oder einen individuellen benutzerunabhängige Anforderungsteil, z. B. 'Telefontyp_Y'. Die Bereichsinformationsanforderung 440 kann auch eine Bluetooth™-Adresse oder eine IP-Adresse des Mobiltelefons sein, welche im Bereichsinformationssender BS 420 zur Ermittlung einer Bereichsinformation interpretiert wird.

Der Bereichsinformationssender BS 420 ermittelt mittels der empfangenen Bereichsinformationsanforderung 440 eine Bereichsinformation 450 und sendet sie an das Mobiltelefon MS 410. Die Ermittlung der Bereichsinformation kann durch ein Verfahren, welches ähnlich der im Mobiltelefon durchgeführten Ermittlung einer Betriebsparametereinstellung mittels einer empfangenen Bereichsinformation ist, erfolgen. Vorzugsweise sind dazu im Bereichsinformationssender BS 420 mögliche Bereichsinformationsanforderungen und zugeordnete Bereichsinformationen gespeichert. Durch einen Vergleich der gespeicherten Bereichsinformations-anforderungen mit der empfangenen Bereichsinformationsanforderung 440 ermittelt der Bereichsinformationssender BS 420 die zugeordnete Bereichsinformation. Alternativ ist im Bereichsinformationssender BS 420 eine Interpretationsvorschrift gespeichert, mittels derer die Ermittlung der Bereichsinformation durch Interpretieren der empfangenen Bereichsinformationsanforderung 440 erfolgt. In einer weiteren Ausgestaltung der Erfindung erfolgt die Ermittlung der Bereichsinformation durch eine Kombination von Vergleichen und Interpretieren.

Die nach dem Empfang der Bereichsinformation 450 durchgeführte Ermittlung und Einstellung der Betriebsparameter, sowie die Kommunikation mit dem Mobilfunknetz erfolgen wie unter Fig. 3 beschrieben. Der zur Kommunikation mit dem Mobilfunknetz erforderliche Nachrichtenaustausch ist in Fig. 4 vereinfacht durch das Nachrichtenbündel 450 dargestellt.

In einer weiteren Ausgestaltung der Erfindung werden die Bereichsinformationsanforderung und die Bereichsinformation bereits beim Herstellen der grundlegenden Bluetooth™-Verbindung ausgetauscht, beispielsweise bei der Authentifizierung. Die Nachrichten mit der Bereichsinformationsanforderung 440 und der Bereichsinformation 450 sind in diesem Fall im Nachrichtenbündel 430 enthalten.

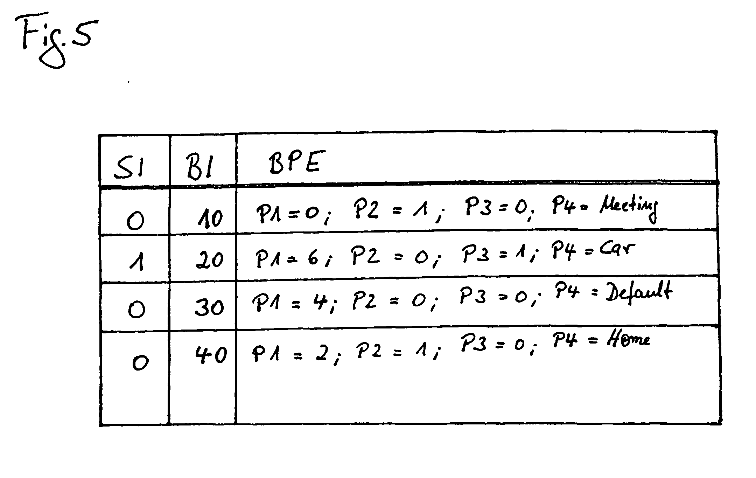

Fig. 5 zeigt eine Zuordnung von Bereichsinformationen und Betriebsparametereinstellungen, die im mobilen Endgerät gespeichert ist. Der Bereichsinformation BI sind jeweils eine Betriebsparametereinstellung BPE und eine Statusinformation SI zugeordnet. Die Bereichsinformation BI ist ein numerischer Wert (10, 20, 30, 40). Die Statusinformation nimmt die Werte '0' oder '1' an. Die Statusinformation '1', die auch Flag genannt wird, bezeichnet eine gegenwärtig eingestellte Betriebsparametereinstellung des Endgerätes, während die Statusinformation '0' angibt, daß die entsprechende Betriebsparametereinstellung gegenwärtig nicht aktiviert ist. Vier verschiedene Betriebsparameter (P1, P2, P3, P4) können eingestellt werden. P1 nimmt ganzzahlige Werte zwischen 0 und 6 an und stellt beispielsweise die Ruflautstärke eines Mobiltelefons ein. P2 und P3 können die Werte 0 und 1 annehmen. P2=1 aktiviert beispielsweise den Vibrationsalarm eines Mobiltelefons. P3 =1 aktiviert beispielsweise eine Bluetooth™-Übertragungseinrichtung zur Kommunikation mit einem Mobilfunknetz und deaktiviert gleichzeitig einen GSM-Transceiver des Mobiltelefons. P4 ist eine Zeichenkette, die beispielsweise einen Text, der auf einem Display des Mobiltelefons angezeigt wird, enthält. Die in Fig. 5 gezeigte aktive Einstellung ist der Bereichsinformation '20' zugeordnet. Die entsprechende Betriebsparametereinstellung sorgt für Ruftonlautstärke '6', ausgeschalteten Vibrationsalarm, aktivierte Bluetooth™-Übertragungseinrichtung und die Anzeige 'car' auf dem Display. Sobald das Mobiltelefon eine Bereichsinformation empfängt, ermittelt es durch Vergleichen der empfangenen Bereichsinformation mit gespeicherten Bereichsinformation, ob eine Übereinstimmung vorliegt. Wenn eine Übereinstimmung vorliegt, die eine andere als die gegenwärtige Betriebsparametereinstellung indiziert, werden die der übereinstimmenden Bereichsinformation zugeordneten Betriebsparameter durch das Umsetzen des Flag's eingestellt. Wird beispielsweise die Bereichsinformation '40' empfangen, vergleicht das Mobiltelefon diesen Wert mit den in der Spalte BI gespeicherten Werten. In der 4. Zeile wird eine Übereinstimmung gefunden. Daraufhin wird eine neue Statusinformation ermittelt, d.h. es wird als Statusinformation in Zeile 2 eine '0' eingetragen, und somit die bisherige Betriebsparametereinstellung deaktiviert, sowie in Zeile 4 als Statusinformation eine '1' eingetragen, und somit eine Betriebsparametereinstellung eingestellt, die für Ruflautstärke '2', eingeschalteten Vibrationsalarm, aktivierten GSM-Transceiver und die Anzeige 'Home' auf dem Display sorgt.

In einer weiteren Ausgestaltung, die ohne Figur beschrieben wird, enthält die Zuordnungstabelle als Bereichsinformationen BI numerische Werte und als jeweils zugeordnete Betriebsparametereinstellungen BPE ein oder mehrere AT-Kommandos in Form einer oder mehrerer Zeichenketten. Die Tabelle enthält keine Statusinformationen SI. Die Einstellung einer Betriebsparametereinstellung erfolgt durch Auslesen der AT-Kommandos, die einer Bereichsinformation BI zugeordnet sind, und durch die Weiterverarbeitung dieser AT-Kommandos von der Rechnereinheit des Endgerätes. Einzelheiten zu AT-Kommandos zur Einstellung von Betriebsparametern eines Mobiltelefons sind beispielsweise in dem ETSI Standard TS 100 916, Version 7.5.0 angegeben.

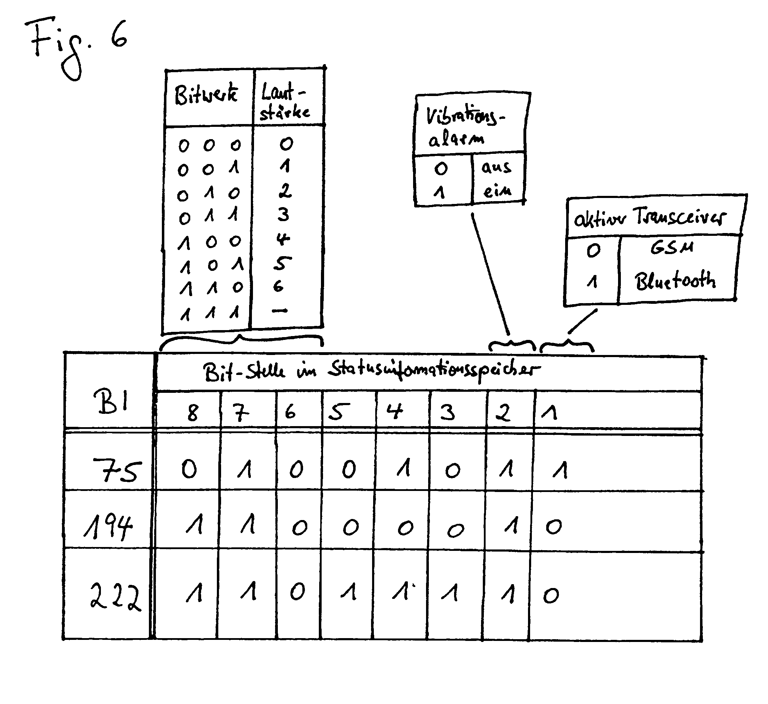

Fig. 6 zeigt ein Beispiel einer Interpretationsvorschrift für eine empfangene Bereichsinformation. Die Bereichsinformation BI ist ein Dezimalwert, der Werte von 0 bis 255 annehmen kann, d.h. die Bereichsinformation kann durch ein Byte dargestellt werden. In einem Mobiltelefon als Endgerät wird die Binärdarstellung der Bereichsinformation mittels der Bitwerte interpretiert. Die empfangene Bereichsinformation BI wird im Endgerät in binärer Darstellung in einem Statusinformationsspeicher abgespeichert. Im angegebenen Beispiel erfolgt die Betriebsparametereinstellung durch die Interpretation der sechsten, siebten und achten Bitstelle für die Einstellung der Ruflautstärke, durch die Interpretation der zweiten Bitstelle für den Vibrationsalarm und die Interpretation der ersten Bitstelle für den aktiven Transceiver. Die drei Bits für die Ruflautstärke ermöglichen die Einstellungen '0' bis '6'. Beispielsweise entsprechen den Bitwerten 000 die Ruftonlautstärke '0' und den Bitwerten 110 die Ruftonlautstärke '6'. Der Bitwert 111 ist nicht belegt. Der Vibrationsalarm wird durch den Bitwert 1 der zweiten Bitstelle des Statusinformationsspeichers eingeschaltet und durch den Bitwert 0 ausgeschaltet. Der Bitwert 1 an der ersten Bitstelle legt einen Bluetooth™-Transceiver des Endgerätes als aktiven Transceiver fest, während der Bitwert 0 einen GSM-Transceiver als aktiven Transceiver einstellt. Die empfangene Bereichsinformation 75, welche als Binärwert 01001011 im Statusinformationsspeicher gespeichert wird, führt zur Einstellung der Ruftonlautstärke '2', aktiviertem Vibrationsalarm und aktiviertem Bluetooth™-Transceiver.

Die dritte, vierte und fünfte Bitstelle sind im angegebenen Beispiel nicht belegt, d.h. sie werden zur Betriebsparametereinstellung nicht ausgewertet. Deshalb führen beispielsweise die empfangenen Bereichsinformationen BI=75, binär 11000010, und BI=222, binär 11011110, zur gleichen Betriebsparametereinstellung.

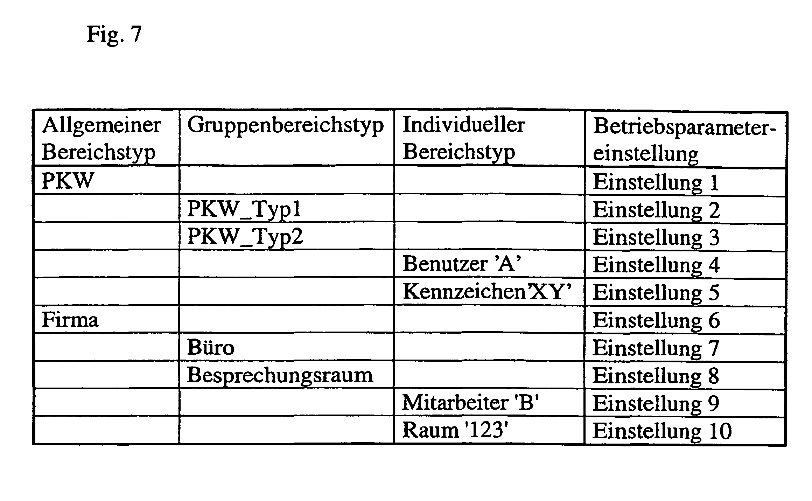

Eine Bereichsinformation, die von einem Bereichsinformationssender gesendet wird, kann einen oder mehrere Bereichstypen enthalten. Fig. 7 zeigt beispielhaft verschiedene Bereichstypen, aus der eine Bereichsinformation bestehen kann, sowie deren Zuordnung zu Betriebsparametereinstellungen im Endgerät. Gezeigt sind ein allgemeiner Bereichstyp ('PKW', 'Firma'), ein Gruppenbereichstyp ('PKW_Typ1, 'PKW_Typ2') und ein individueller Bereichstyp ("Benutzer 'A' ", "Kennzeichen 'XY'", "Mitarbeiter'B' ", "Raum '123'"). Der allgemeine Bereichstyp bewirkt als übergeordneter Typ eine Betriebsparametereinstellung im Endgerät, die für alle Aufenthaltsbereiche dieses Typs gleich ist. Er wird von einer Vielzahl von Endgeräten ausgewertet. Beispielsweise führt die Bereichsinformation 'PKW' bei erfindungsgemäßen Endgeräten in allen PKW, d.h. unabhängig vom PKW-Typ oder dem Endgerätbenutzer, zur 'Einstellung 1'. Wenn eine eindeutige Auswertung der Bereichsinformation mittels der gespeicherten Vergleichsdaten nicht möglich ist, kann die gesendete Bereichsinformation zusätzlich mittels einer Interpretationsvorschrift interpretiert werden.

Der Gruppenbereichstyp erlaubt eine differenziertere Einstellung von Betriebsparametern für den Aufenthaltsbereich. Es gibt benutzerabhängige und benutzerunabhängige Gruppenbereichstypen. So werden gleiche Betriebsparametereinstellungen für bestimmte Benutzergruppen oder bestimmte Gruppen von Aufenthaltsbereichen erwirkt. Dies ermöglicht beispielsweise den Mitgliedern einer Benutzergruppe den Zugang zu gemeinsamen Ressourcen der Gruppe.

Der individuelle Bereichstyp bewirkt für einen bestimmten Aufenthaltsbereich oder für einen bestimmten Benutzer eine besondere Betriebsparametereinstellung. Dies erlaubt die Einstellung von persönlichen, vom Benutzer individuell bestimmten Betriebsparametern im Endgerät. Beispielsweise kann in einem Laptop eine personalisierte Programmumgebung eingestellt werden.

Vorzugsweise hat eine mehrteilige Bereichsinformation ein Format einer DNS-Adresse, z.B. "Firma.Büro.Raum123". Ein Bereichsinformationssender kann die verschiedenen Teile der Bereichsinformation zusammen in einer Nachricht oder verteilt über mehrere Nachrichten senden.

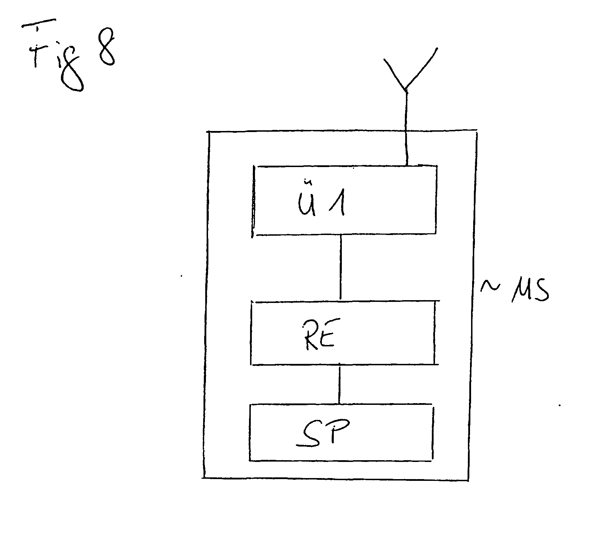

Fig. 8 zeigt eine vereinfachte Darstellung von Komponenten eines mobilen Endgerätes MS. Gezeigt sind eine erste Übertragungseinrichtung Ü1, welche eine Bereichsinformation drahtlos empfängt. Die Übertragungseinrichtung Ü1 ist verbunden mit einer Rechnereinheit RE, welche mittels der empfangenen Bereichsinformation Betriebsparameter des Endgerätes MS ermittelt. Die Rechnereinheit RE ist verbunden mit einem Statusspeicher SP. Die Rechnereinheit RE stellt mittels des Statusspeichers SP die ermittelten Betriebsparameter als Betriebsparameter des Endgerätes ein.

In einer Ausgestaltung enthält das mobile Endgerät MS weiterhin einen Bereichsinformationsspeicher, in dem Bereichsinformationen und Betriebsparameter einander zugeordnet sind. In einer alternativen Ausgestaltung enthält ein gemeinsamer Speicher Bereiche für Bereichsinformationsspeicherdaten oder Statusspeicherdaten.

In weiteren Ausgestaltung enthält das mobile Endgerät MS weiterhin einen Interpretationsvorschriftsspeicher, in dem eine Interpretationsvorschrift für eine Bereichsinformationen gespeichert ist. In einer alternativen Ausgestaltung ist der Interpretationsvorschriftsspeicher in den Statusspeicher oder in den Bereichsinformationsspeicher integriert. In einer weiteren Ausgestaltung enthält eine SIM-Karte des Endgerätes Komponenten wie beispielsweise die Rechnereinheit RE, den Bereichsinformationsspeicher oder den Interpretationsvorschriftsspeicher.

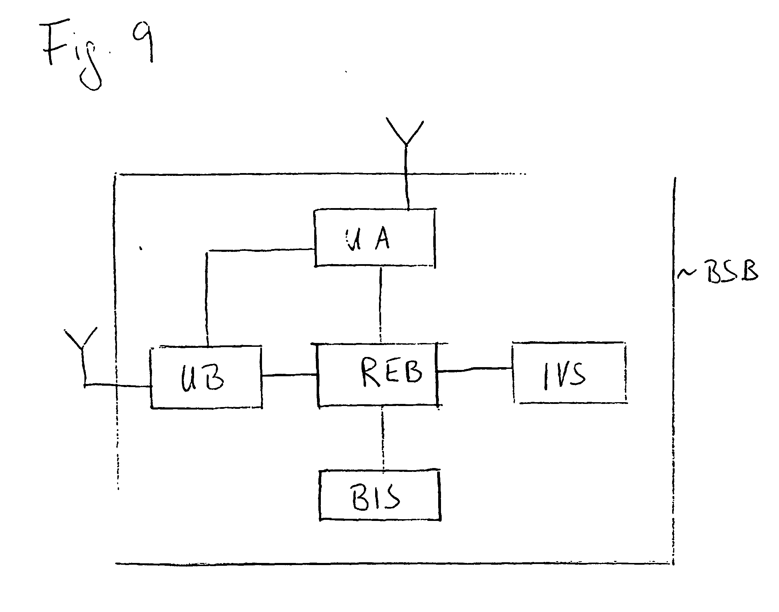

Fig. 9 zeigt in einer vereinfachten Darstellung Komponenten eines Bereichsinformationssenders BSB. Der Bereichsinformationssender BSB enthält eine erste Übertragungseinrichtung UA, eine zweite Übertragungseinrichtung UB, einem Bereichsinformationsspeicher BIS und einen Interpretationsvorschriftsspeicher IVS. Weiterhin enthält der Bereichsinformationssender eine Rechnereinheit REB, die mit allen anderen Komponenten verbunden ist.

Die erste Übertragungseinrichtung empfängt eine Bereichsinformationsanforderung, und sendet eine zugeordnete Bereichsinformation aus. Die Bereichsinformation wird von der Rechnereinheit aus der Bereichsinformationsanforderung mittels Bereichsinformationsdaten, die in dem Bereichsinformationsspeicher BIS gespeichert sind, und mittels einer Interpretationsvorschrift, die im Interpretationsvorschriftsspeicher IVS enthalten ist, ermittelt. Die zweite Übertragungseinrichtung UB dient einer Kommunikationsvermittlung zwischen einem Mobilfunkgerät und einem Mobilfunknetz. Beide Übertragungseinrichtungen UA, UB sind miteinander verbunden. Im Uplink-Fall einer Kommunikation mit dem Mobilfunknetz empfängt die erste Übertragungseinrichtung UA Benutzerdaten und Signalisierungsinformationen von dem Endgerät und gibt sie weiter an die zweite Übertragungseinrichtung UB, welche sie an das Kommunikationssystem weitergibt. Der Downlink-Fall verläuft umgekehrt. Die Rechnereinheit REB kontrolliert jeweils den Einsatz der Übertragungsvorrichtungen UA, UB.

In einer alternativen Ausführung sind Komponenten des Bereichsinformationssenders BSB zusammengefaßt. Beispielsweise können die Speicher IVS, BIS Speicherbereiche eines gemeinsamen Speichers darstellen. Die Speicher IVS, BIS können in der Rechnereinheit REB integriert sein.

Eine weitere Ausgestaltung der vorliegenden Erfindung betrifft ein Computerprogramm. Das Computerprogramm, welches in einen internen Speicher einer digitalen Rechnereinheit, insbesondere eines Mobiltelefons, geladen werden kann, enthält Softwarecodeteile, die geeignet sind, das erfindungsgemäße Verfahren durchzuführen, wenn das Computerprogramm auf der Rechnereinheit ausgeführt wird.

Dieses Computerprogramm kann insbesondere auch auf einem computerlesbaren Medium wie beispielsweise einer Diskette, CD-ROM oder einer optischen Platte gespeichert sein.

## Patentansprüche

1. Bereichsinformationssender (BSB) zur Signalisierung einer Bereichsinformation (BI) zur Einstellung von Betriebsparametern eines mobilen Endgerätes (MS),
**gekennzeichnet durch**
- eine erste Übertragungsvorrichtung (UA), welche eine Bereichsinformationsanforderung empfängt und eine zugeordnete Bereichsinformation (BI) drahtlos in einem begrenzten Sendegebiet (110, 210) aussendet,
- einen Bereichsinformationsspeicher (BIS), welcher Bereichsinformationsdaten speichert, und
- eine Rechnereinheit (REB), welche mittels der gespeicherten Bereichsinformationsdaten die Bereichsinformation (BI) ermittelt, die der Bereichsinformationsanforderung zugeordnet ist.

2. Bereichsinformationssender (BSB) nach Anspruch 1, bei dem der Bereichsinformationssender (BSB) mobil ist.

3. Bereichsinformationssender (BSB) nach Anspruch 1 oder 2, bei dem im Bereichsinformationsspeicher (BIS) Bereichsinformationsanforderungen und Bereichsinformationen (BI) einander zugeordnet und gespeichert sind, und bei dem die Rechnereinheit (REB) durch Vergleichen eine Übereinstimmung zwischen der empfangenen Bereichsinformationsanforderung und einer gespeicherten Bereichsinformationsanforderung feststellt und als zu sendende Bereichsinformation die der übereinstimmenden Bereichsinformationsanforderung zugeordnete Bereichsinformation ermittelt.

4. Bereichsinformationssender (BSB) nach einem der Ansprüche 1 bis 3, bei dem die Rechnereinheit (REB) die Bereichsinformation (BI) mittels einer Interpretationsvorschrift ermittelt.

5. Bereichsinformationssender (BSB) nach einem der Ansprüche 1 bis 4, mit einer zweiten Übertragungseinrichtung (UB) zur Kommunikation mit einem Mobilfunknetz.

6. Verfahren zur Signalisierung einer Bereichsinformation (BI) zur Einstellung von Betriebsparametern eines mobilen Endgerätes (MS),
**dadurch gekennzeichnet, dass**
- eine erste Übertragungsvorrichtung (UA) eines Bereichsinformationssenders (BSB) eine Bereichsinformationsanforderung empfängt,
- eine Rechnereinheit (REB) des Bereichsinformationssenders (BSB) mittels in einem Bereichsinformationsspeicher (BIS) gespeicherter Bereichsinformationsdaten die Bereichsinformation (BI) ermittelt, die der Bereichsinformationsanforderung zugeordnet ist, und
- die erste Übertragungsvorrichtung (UA) die zugeordnete Bereichsinformation (BI) drahtlos in einem begrenzten Sendegebiet (110, 210) aussendet.

7. Verfahren nach Anspruch 6, bei dem im Bereichsinformationsspeicher (BIS) Bereichsinformationsanforderungen und Bereichsinformationen (BI) einander zugeordnet und gespeichert sind, und bei dem die Rechnereinheit (REB) durch Vergleichen eine Übereinstimmung zwischen der empfangenen Bereichsinformationsanforderung und einer gespeicherten Bereichsinformationsanforderung feststellt und als zu sendende Bereichsinformation die der übereinstimmenden Bereichsinformationsanforderung zugeordnete Bereichsinformation ermittelt.

8. Verfahren nach Anspruch 6 oder 7, bei dem die Rechnereinheit (REB) die Bereichsinformation (BI) mittels einer Interpretationsvorschrift ermittelt.

9. Verfahren nach einem der Ansprüche 6 bis 8,bei dem die Rechnereinheit REB den Einsatz einer zweiten Übertragungseinrichtung (UB) zur Kommunikationsvermittlung zwischen einem Mobilfunkgerät und einem Mobilfunknetz kontrolliert.

10. Computerprogramm, welches in einen internen Speicher einer digitalen Rechnereinheit geladen werden kann, und welches Softwarecodeteile enthält, die geeignet sind, die Schritte nach einem der Ansprüche 6 bis 9 durchzuführen, wenn das Computerprogramm auf der Rechnereinheit ausgeführt wird.

11. Computerprogramm nach Anspruch 10, bei dem das Computerprogramm auf einem computerlesbaren Medium gespeichert ist.

## Claims

1. A regional information transmitter (BSB) that serves for signaling regional information (BI) used for adjusting operating parameters of a mobile terminal (MS), **characterized in**
- a first transmitting device (UA) that receives a regional information request and transmits assigned regional information (BI) in a wireless fashion within a limited transmission area (110, 210),
- a regional information memory (BIS) that stores regional information data, and
- a processing unit (REB) that determines the regional information (BI) assigned to the regional information request based on the stored regional information data.

2. The regional information transmitter (BSB) according to claim 1, wherein the regional information transmitter (BSB) is mobile.

3. The regional information transmitter (BSB) according to claim 1 or 2, wherein regional information requests and regional information (BI) are assigned to one another and stored in the regional information memory (BIS), wherein the processing unit (REB) determines a concurrence between the received regional information request and a stored regional information request by carrying out a comparison, and wherein the processing unit designates the regional information assigned to the concurring regional information request as the regional information to be transmitted.

4. The regional information transmitter (BSB) according to one of claims 1-3, wherein the processing unit (REB) determines the regional information (BI) by means of an interpretation rule.

5. The regional information transmitter (BSB) according to one of claims 1-4, with a second transmitting device (UB) that serves for communicating with a mobile network.

6. A method for signaling regional information (BI) used for adjusting operating parameters of a mobile terminal (MS),
**characterized in that**
- a first transmitting device (UA) of a regional information transmitter (BSB) receives a regional information request,
- a processing unit (REB) of the regional information transmitter (BSB) determines the regional information (BI) assigned to the regional information request based on regional information data stored in a regional information memory (BIS), and
- the first transmitting device (UA) transmits the assigned regional information (BI) in a wireless fashion within a limited transmission area (110, 210).

7. The method according to claim 6, wherein regional information requests and regional information (BI) are assigned to one another and stored in the regional information memory (BIS), wherein the processing unit (REB) determines a concurrence between the received regional information request and a stored regional information request by carrying out a comparison, and wherein the processing unit designates the regional information assigned to the concurring regional information request as the regional information to be transmitted.

8. The method according to claim 6 or 7, wherein the processing unit (REB) determines the regional information (BI) by means of an interpretation rule.

9. The method according to one of claims 6-8, wherein the processing unit REB controls a second transmitting device (UB) that serves for the communication between a mobile terminal and a mobile network.

10. A computer program that can be loaded into an internal memory of a digital computer and contains software code segments that are suitable for carrying out the steps according to one of claims 6-9 when the computer program is executed on the computer.

11. The computer program according to claim 10, wherein the computer program is stored on a computer-readable medium.

## Revendications

1. Emetteur d'informations de zone (BSB) pour signaliser une information de zone (BI) afin de régler les paramètres de fonctionnement d'un terminal mobile (MS), **caractérisé par**
- un premier dispositif de transmission (UA), qui reçoit une demande d'information de zone et envoie une information de zone (BI) correspondante sans fil dans une zone d'émission (110,210) délimitée,
- une mémoire d'information de zone (BIS), qui stocke des données d'information de zone, et
- une unité informatique (REB), qui détermine au moyen des données d'information de zone stockées l'information de zone (BI), qui est coordonnée à la demande d'information de zone.

2. Emetteur d'informations de zone (BSB) selon la revendication 1, dans lequel l'émetteur d'informations de zone (BSB) est mobile.

3. Emetteur d'informations de zone (BSB) selon la revendication 1 ou 2, dans lequel, dans la mémoire d'informations de zone (BIS), des demandes d'informations de zone et des informations de zone (BI) sont coordonnées les unes aux autres et stockées et dans lequel l'unité informatique (REB) établit par comparaison une concordance entre la demande d'informations de zone reçue et une demande d'information de zone stockée et détermine comme information de zone à envoyer l'information de zone coordonnée à la demande d'information de zone concordante.

4. Emetteur d'informations de zone (BSB) selon une des revendications 1 à 3, dans lequel l'unité informatique (REB) détermine l'information de zone (BI) au moyen d'une règle d'interprétation.

5. Emetteur d'informations de zone (BSB) selon une des revendications 1 à 4, comportant un deuxième dispositif de transmission (UB) communiquant avec un réseau radio mobile.

6. Procédé de signalisation d'une information de zone (BI) afin de régler les paramètres de fonctionnement d'un terminal mobile (MS), **caractérisé en ce que**
- un premier dispositif de transmission (UA) d'un émetteur d'informations de zone (BSB) reçoit une demande d'information de zone,
- une unité informatique (REB) de l'émetteur d'information de zone (BSB) détermine l'information de zone, qui est coordonnée à la demande d'information de zone, au moyen des données d'information de zone stockées dans une mémoire d'information de zone (BIS), et
- le premier dispositif de transmission (UA) envoie l'information de zone (BI) coordonnée sans fil dans une zone d'émission (110,210) délimitée.

7. Procédé selon la revendication 6, dans lequel, dans la mémoire d'information de zone (BIS), des demandes d'information de zone et des informations de zone (BI) sont coordonnées les unes aux autres et stockées et dans lequel l'unité informatique (REB) établit par comparaison une concordance entre la demande d'information de zone reçue et une demande d'information de zone stockée et détermine comme information de zone à envoyer l'information de zone coordonnée à la demande d'information de zone concordante.

8. Procédé selon la revendication 6 ou 7, dans lequel l'unité informatique (REB) détermine l'information de zone (BI) au moyen d'une règle d'interprétation.

9. Procédé selon une des revendications 6 à 8, dans lequel l'unité informatique (REB) contrôle l'utilisation d'un deuxième dispositif de transmission (UB) pour une liaison de communication entre un appareil radio mobile et un réseau radio mobile.

10. Programme informatique, qui peut être chargé dans une mémoire interne d'une unité informatique numérique et qui contient des portions de code logiciel, lesquelles sont appropriées pour effectuer les étapes selon une des revendications 6 à 9, lorsque le programme informatique est chargé sur l'unité informatique.

11. Programme informatique selon la revendication 10, dans lequel le programme informatique est stocké sur un support qui peut être lu par un ordinateur.
